# EUROPEAN PATENT SPECIFICATION

(11) **EP 4 017 791 B1**
(45) Date of publication and mention of the grant of the patent: **08.05.2024**
(21) Application number: 20855161.4
(22) Date of filing: 19.08.2020
(51) Int. Cl.: B62K 25/24, B60G 5/04, B62K 5/08, B60G 3/18, B60G 3/20, B62K 5/10, B62K 5/00

(54) **A SUSPENSION SYSTEM**
AUFHÄNGUNGSSYSTEM
SYSTÈME DE SUSPENSION

(30) Priority: 21.08.2019 TR 201912591
(43) Date of publication of application: 29.06.2022
(73) Proprietor: T.C. Erciyes Universitesi, 38039 Kayseri (TR)
(72) Inventor: TURKMEN, Zafer, Kayseri (TR)
(74) Representative: Kaya, Erdem
(86) International application number: PCT/TR2020/050724
(87) International publication number: WO 2021/034292

(56) References cited:
- EP-B1- 1 155 950
- WO-A1-2017/062996
- WO-A1-2017/089429
- US-A- 4 212 481
- US-A1- 2013 068 550

## Description

### TECHNICAL FIELD

The present invention relates to a suspension system which can provide variable caster angle depending on the changing load in the vehicles.

### PRIOR ART

Caster is the inclination made by the axle pin or the straight line, which joins the lower and upper suspension arm ball joints, towards the front or rear of vehicle when the vehicle wheels are viewed from the lateral side. When the wheel is viewed from the lateral side, the rearward inclination of the upper part of the pin is named as "Positive Caster" and the opposite is named as "Negative Caster". Both conditions can be seen in the vehicles of the present art.

The aim of the caster angle is to provide movement stability. In vehicle wheels where positive or negative caster is given, when deviation occurs due to the condition of the path, the wheels can return to their prior position again. Caster angle is a system which decreases the pressure of the wheels towards the sides where the wheels press on the floor when the vehicle makes maneuver while the vehicle is moving fast, and which facilitates the complete pressure of the wheels to be exerted onto the floor and which provides stability of the steer during movement of the vehicle.

In the known state of the art, shock absorbers are positioned on the suspension arm group in suspension systems and in a horizontal manner to the vehicle movement direction. The right suspension arm and the left suspension arm provided in the suspension arm group oscillate in an independent manner from each other. Since the suspension arms realize horizontal oscillation with respect to the vehicle direction, caster angle cannot change. This angle is fixed in an independent manner from the condition and load of the vehicle. The caster angle is in general seven degrees. However, different values can be used according to the preferences and calculations of the companies. In tilting vehicles, the usage of a greater caster angle increases the travelling comfort of the vehicle.

In cases where the vehicle is overloaded or speedy or the positive caster is excessive at the instant of braking, the holding of the front wheels on the ground is increased and thus driving safety is increased. Since the wheel distances in micro segment tilting vehicles are less, this characteristic becomes more precious.

EP 1 155 950 B1 discloses all of the features of the preamble of claim 1.

In the literature, in the application with number US7487985, preferably a three-wheeled vehicle having bending mechanism is disclosed. In said application, the suspension is positioned in the wheels and the caster angle does not have a variable characteristic.

In the literature, another application is the patent application with application number DE102014101087 and with title "Inclined framed vehicle". Said application comprises a vehicle structure comprising inclined frame for decreasing the bending trend. In the vehicle structure, the caster angle is fixed and there is no tilting characteristic.

As a result, because of all of the abovementioned problems, an improvement is required in the related technical field.

### BRIEF DESCRIPTION OF THE INVENTION

The present invention relates to a suspension system, for eliminating the above mentioned disadvantages and for bringing new advantages to the related technical field.

The object of the present invention is to provide a suspension system which can provide a variable caster angle depending on the changing load in vehicles.

Another object of the present invention is to provide holding of front wheels on the ground while maneuvering by increasing positive caster angle and to increase driving safety in cases where the vehicle is over-loaded or over-speedy or in case of braking.

Another object of the present invention is to provide production of tilting narrower vehicles thanks to the suspension structure which allows the vehicle wheels to be closer to each other. In order to realize the abovementioned objects and the objects which are to be deducted from the detailed description below, the present invention relates to a suspension system according to appended claim 1.

In a possible embodiment of the present invention, said axis A, said axis B and said axis C are parallel to each other.

In a possible embodiment of the present invention, said suspension arm connection element comprises a housing provided on the carrier element, an opening provided on the suspension arm, a pin which provides connection in a manner providing rotation of said opening in said housing around the own axis thereof. Thus, when a wheel rises, the other wheel lowers symmetrically.

In a possible embodiment of the present invention, in order to provide connection of the suspension arm to the two wheel hubs which provide association of the suspension arm to the two vehicle wheels, the subject matter comprises a shaft connected in a parallel manner to said wheel hub surface and in a manner providing rotational movement in its own axis, a lower housing and an upper housing provided on said shaft, a lower end provided at the lower suspension arm connected to said lower housing and an upper end provided at the upper suspension arm connected to said upper housing. Thus, the suspension arm is connected to the wheel hub.

### BRIEF DESCRIPTION OF THE FIGURES

Figure 1 is a representative perspective view of the suspension system.
Figure 2 is a frontal representative perspective view of the suspensior system.
Figure 3 is a left side representative perspective view of the suspensior system.
Figure 4 is a right side representative perspective view of the suspensior system.

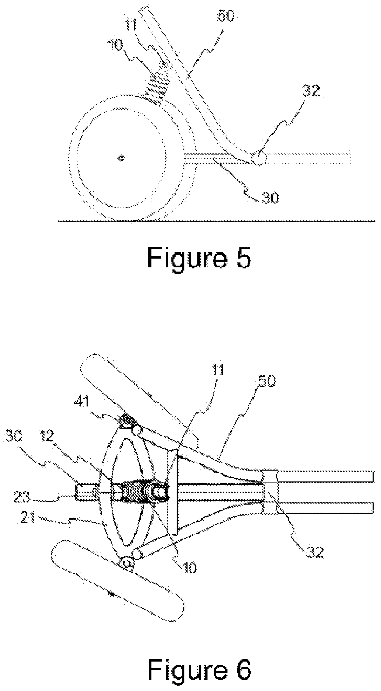

Figure 5 is a representative lateral view of the suspension system.
Figure 6 is a representative top view of the suspension system.
Figure 7 is a representative lateral view where the caster angle of the suspension system has changed in a dependent manner on the load.
Figure 8 is a representative top view where the caster angle of the suspensior system has changed in a dependent manner on the load.

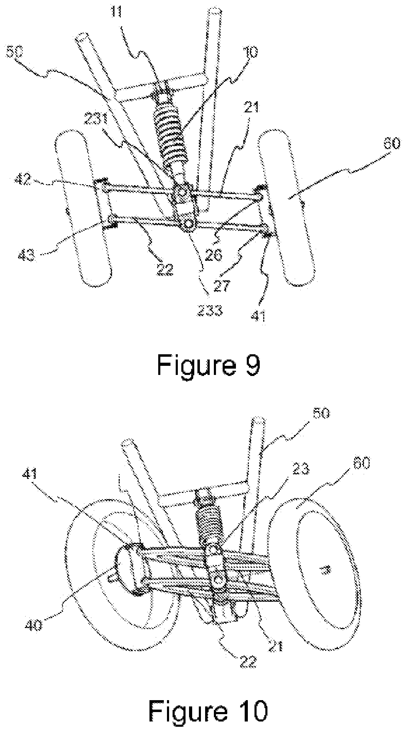

Figure 9 is a representative frontal view where the suspension system is tilted without load and without maneuver of the steer.
Figure 10 is a representative frontal view where the suspension system is tilted with load and with maneuver of the steer.

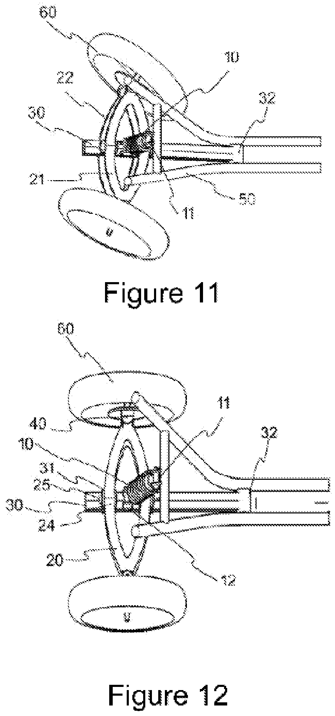

Figure 11 is a representative top view where the suspension system is tilted with load and with maneuver of the steer.
Figure 12 is a representative top view where the suspension system is tilted while the steer is in a straight position.

### DETAILED DESCRIPTION OF THE INVENTION

In this detailed description, the subject matter suspension system (1) is explained with references to examples without forming any restrictive effect only in order to make the subject more understandable.

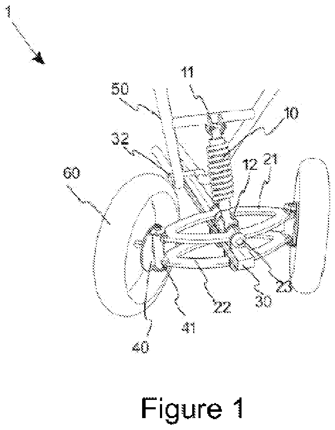

In Figure 1, a representative perspective view of the suspension system (1) is given. The present invention relates to a suspension system (1) which can provide variable caster angle in a dependent manner on the changing load in vehicles. There is an upper suspension arm (21) and a lower suspension arm (22) associated with a chassis (50) in said suspension system (1). There is a carrier element between said upper suspension arm (21) and said lower suspension arm (22). The upper suspension arm (21) and the lower suspension arm (22) are connected onto said carrier element (30) by means of at least one suspension arm connection element (23) through the middle point of the surfaces of said upper suspension arm (21) and said lower suspension arm (22) which face each other. The carrier element (30) is connected to the chassis (50) in a manner able to realize rotational movement around an axis C (III) by means of at least one chassis connection element (32) provided at an end part of said carrier element (30). A shock absorber (10) is connected by means of a lower connection element (12), provided at one end thereof, to the other end of the carrier element (30) where the carrier element (30) is connected to the suspension arm (20) such that said shock absorber (10) can make rotational movement around an axis B (II). An upper connection element (50), provided at the other end of said shock absorber (10), is connected to the chassis (50) in a manner able to realize rotational movement around an axis A (I). Said axis A (I), said axis B (II) and said axis C (III) are positioned in a parallel manner to each other.

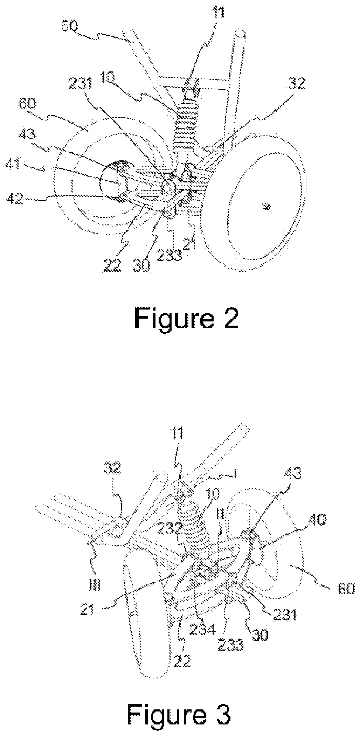

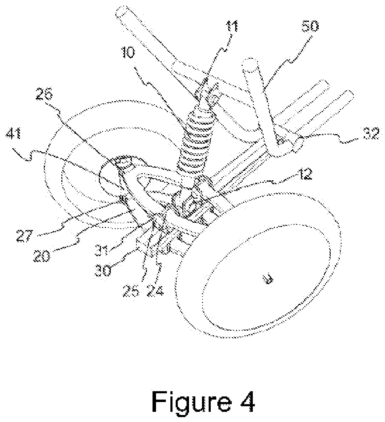

In Figure 2, 3 and 4, the representative perspective views of the suspensior system (1) are given. In the suspension system (1), the upper suspension arm (21) and the lower suspension arm (22) move in a parallel manner to each other. The carrier element (30) extends in the direction of the chassis (50) through the middle of the upper suspension arm (21) and the lower suspension arm (22). The connection of the suspension arm (20) onto the carrier element (30) is provided by means of at least one suspension arm connection element (23). Said suspension arm connection element (23) comprises at least one opening (24) provided in the middles of the upper suspension arm (21) and the lower suspension arm (22), a housing (31) provided in the carrier element (30) in a manner corresponding to said opening (24), and a pin (25) which provides connection in a manner providing rotation in its own axis in said housing (31). The suspension arm connection element (23) provides fixation of the suspension arm (20) to the carrier element (30) by means of an upper front part (231), an upper rear part (232), a lower front part (233) and a lower rear part (234) through the middle of the surfaces of the upper suspension arm (21) and the lower suspension arm (22). The suspension arm (20) can realize rotational movement in said pin (25) axis on the carrier element (30). Thus, when a wheel (60) rises, the other wheel (60) lowers symmetrically.

In order to provide connection of the suspension arm (20) to the two wheel hubs (40) which provide association to the two vehicle wheels (60), there is a shaft (41) connected in a parallel manner to said wheel hub (40) surface and in a manner able to realize rotational movement in its own axis. A lower housing (42) and an upper housing (43) are provided on said shaft (41). An upper end (26), provided at the ends of the upper suspension arm (21), is connected to said upper housing (43), and a lower end (27), provided at the ends of the lower suspension arm (22), is connected to said lower housing (42).

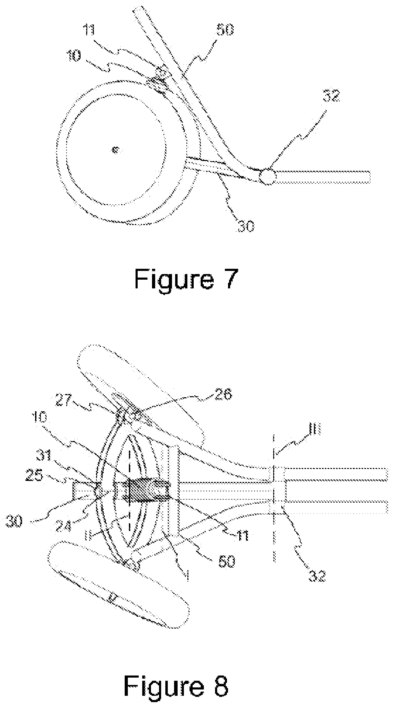

In Figure 7, a representative lateral view where the caster angle of the suspension system (1) has changed is given. The shock absorber (10) is connected to the chassis (50) in a rotatable manner in an axis A (I) by means of an upper connection element (11) from one end thereof. The other end of the shock absorber (10) is connected to the carrier element (30) in a manner able to realize rotational movement in an axis B (II) by means of a lower connection element (12). Thus, when the weight in the vehicle changes, the shock absorber (10) provides the upper connection element (11) to move with respect to axis A (I) and the lower connection element (12) to move with respect to axis B (II) and depending on this, the carrier element (30) can move with respect to axis C (III). Thus, depending on the changing load in vehicles, a suspension system (1) is provided which can provide a variable caster angle. As the vehicle load increases, the caster angle can be increased as suitable. For instance, the caster angle can be equal to zero when the vehicle is empty, it can be equal to 5-6 degrees when one person gets on the vehicle and it can be 7-9 degrees when two persons get on the vehicle. The vehicle can have a positive caster angle of 3 degrees when the vehicle is empty, and it can have a caster angle of 13 degrees when there is positive caster load of 10 degrees. The mentioned caster angle values can change according to connection distance of the chassis connection element (32) of the carrier element (30).

In cases where instant braking and maneuver is required while the vehicle moves rapidly and where braking is realized, load is exerted more to the front wheels (60). Thanks to the changeability of the caster angle, since the caster angle is going to automatically increase in case of instant braking, the holding of the vehicle on the ground increases while making maneuver. Thus, the driving safety is increased. Thanks to the suspension system (1) with single shock absorber (10), the vehicle wheels (60) can be closer to each other, and tilting vehicles, which are narrower, can be produced.

The protection scope of the present invention is set forth in the annexed claims and is not restricted to the illustrative disclosures given above, under the detailed description.

### REFERENCE NUMBERS

1 Suspension system
10 Shock absorber
   11 Upper connection element
   12 Lower connection element
20 Suspension arm
   21 Upper suspension arm
   22 Lower suspension arm
   23 Suspension arm connection element
      231 Upper front part
      232 Upper rear part
      233 Lower front part
      234 Lower rear part
   24 Opening
   25 Pin
   26 Upper end
   27 Lower end
30 Carrier element
   31 Housing
   32 Chassis connection element
40 Wheel hub
   41 Shaft
   42 Lower housing
   43 Upper housing
50 Chassis
60 Wheel
I- Axis A
II- Axis B
III- Axis C

## Claims

1. A suspension system (1) associated with a chassis (50) and which has a suspension arm (20) and a shock absorber (10) associated with said suspension arm (20), the suspension system (1) comprises:
an upper suspension arm (21) and a lower suspension arm (22) provided at said suspension arm (20), and the upper suspension arm (21) and the lower suspension arm (22) form a parallelogram linkage carrying a respective right wheel (60) and a respective left wheel (60) at each end of the upper suspension arm (21) and the lower suspension arm (22)
a carrier element (30) which extends in the direction of the chassis (50) between said upper suspension arm (21) and said lower suspension arm (22),
at least one suspension arm connection element (23) which provides connection onto said carrier element (30) through the middle of the surfaces of the upper suspension arm (21) and the lower suspension arm (22) facing each other,
a chassis connection element (32) provided at the end part of the carrier element (30) which extends towards the chassis (50) side and which provides connection to the chassis (50) in a manner providing rotational movement around an axis C (III) extending perpendicular to the extension direction of the carrier element (30) and perpendicular to the axis of the suspension arm connection elements (23);
at least one lower connection element (12) provided at one end of said shock absorber (10) and which provides connection to the surface of the carrier element (30) which faces the upper suspension arm in a manner providing rotational movement around an axis B (II),
at least one upper connection element (11) provided at the other end of said shock absorber (10) and which provides connection to the chassis (50) in a manner providing rotational movement around an axis A (I) **characterized in that**, the
suspension arm connection elements (23) of the upper suspension arm (21) and the lower suspension arm (22) are positioned both at an upper front part (231), at an upper rear part (232), at a lower front part (233) and at a lower rear part (234) in the middle of the surfaces of the upper suspension arm (21) and the lower suspension arm (22) in order to provide connection of the suspension arm (20) and the carrier element (30),
said lower connection element (12) of the shock absorber (10) is connected to the gap between the upper front part (231) and the upper rear part (232) of the upper suspension arm (21).

2. The suspension system (1) according to claim 1, wherein said axis A (I), said axis B (II) and said axis C (III) are parallel to each other.

3. The suspension system (1) according to claim 1 or 3, wherein said suspension arm connection element (23) comprises a housing (31) provided on the carrier element (30), an opening (24) provided on the suspension arm (20), a pin (25) which provides connection in a manner providing rotation of said opening (24) in said housing (31) around the own axis thereof.

4. The suspension system (1) according to claim 1, **wherein** in order to provide connection of the suspension arm (20) to the two wheel hubs (40) which provide association of the suspension arm (20) to the two vehicle wheels (60), a shaft (41) connected in a parallel manner to said wheel hub (40) surface and in a manner providing rotational movement in its own axis, a lower housing (42) and an upper housing (43) provided on said shaft (41), a lower end (27) provided at the lower suspension arm (22) connected to said lower housing (42) and an upper end (26) provided at the upper suspension arm (21) connected to said upper housing (43).

## Patentansprüche

1. Aufhängungssystem (1), das mit einem Fahrgestell (50) verbunden ist und einen Aufhängungsarm (20) und einen Stoßdämpfer (10) aufweist, der mit dem Aufhängungsarm (20) verbunden ist, wobei das Aufhängungssystem (1) umfasst:
einen oberen Aufhängungsarm (21) und einen unteren Aufhängungsarm (22), die an dem Aufhängungsarm (20) vorgesehen sind, wobei der obere Aufhängungsarm (21) und der untere Aufhängungsarm (22) ein Parallelogrammgestänge bilden, das an jedem Ende des oberen Aufhängungsarms (21) und des unteren Aufhängungsarms (22) ein entsprechendes rechtes Rad (60) und ein entsprechendes linkes Rad (60) trägt, ein Trägerelement (30), das sich in Richtung des Fahrgestells (50) zwischen dem oberen Aufhängungsarm (21) und dem unteren Aufhängungsarm (22) erstreckt,
mindestens ein Aufhängungsarm-Verbindungselement (23), das eine Verbindung mit dem Trägerelement (30) durch die Mitte der einander zugewandten Oberflächen des oberen Aufhängungsarms (21) und des unteren Aufhängungsarms (22) bereitstellt,
ein Fahrgestell-Verbindungselement (32), das an dem Endteil des Trägerelements (30) vorgesehen ist, das sich in Richtung der Seite des Fahrgestells (50) erstreckt und das eine Verbindung mit dem Fahrgestell (50) in einer Weise bereitstellt, die eine Drehbewegung um eine Achse C (III) ermöglicht, die sich senkrecht zur Erstreckungsrichtung des Trägerelements (30) und senkrecht zur Achse der Aufhängungsarm-Verbindungselemente (23) erstreckt;
mindestens ein unteres Verbindungselement (12), das an einem Ende des Stoßdämpfers (10) vorgesehen ist und das eine Verbindung mit der Oberfläche des Trägerelements (30) herstellt, die dem oberen Aufhängungsarm in einer Weise zugewandt ist, die eine Rotationsbewegung um eine Achse B (II) ermöglicht,
mindestens ein oberes Verbindungselement (11), das am anderen Ende des Stoßdämpfers (10) vorgesehen ist und das eine Verbindung mit dem Fahrgestell (50) in einer Weise herstellt, die eine Drehbewegung um eine Achse A (I) ermöglicht, **dadurch gekennzeichnet, dass** die Aufhängungsarm-Verbindungselemente (23) des oberen Aufhängungsarms (21) und des unteren Aufhängungsarms (22) sowohl an einem oberen vorderen Teil (231), an einem oberen hinteren Teil (232), an einem unteren vorderen Teil (233) und an einem unteren hinteren Teil (234) in der Mitte der Oberflächen des oberen Aufhängungsarms (21) und des unteren Aufhängungsarms (22) angeordnet sind, um eine Verbindung des Aufhängungsarms (20) und des Trägerelements (30) bereitzustellen,
wobei das untere Verbindungselement (12) des Stoßdämpfers (10) mit dem Spalt zwischen dem oberen vorderen Teil (231) und dem oberen hinteren Teil (232) des oberen Aufhängungsarms (21) verbunden ist.

2. Aufhängungssystem (1) nach Anspruch 1, wobei die Achse A (I), die Achse B (II) und die Achse C (III) parallel zueinander sind.

3. Aufhängungssystem (1) nach Anspruch 1 oder 3, wobei das Aufhängungsarm-Verbindungselement (23) ein Gehäuse (31), das an dem Trägerelement (30) vorgesehen ist, eine Öffnung (24), die an dem Aufhängungsarm (20) vorgesehen ist, und einen Stift (25) umfasst, der die Verbindung in einer Weise herstellt, die eine Drehung der Öffnung (24) in dem Gehäuse (31) um seine eigene Achse ermöglicht.

4. Aufhängungssystem (1) nach Anspruch 1, wobei es zur Verbindung des Aufhängungsarms (20) mit den beiden Radnaben (40), die die Verbindung des Aufhängungsarms (20) mit den beiden Fahrzeugrädern (60) herstellen, eine Welle (41), die parallel zur Oberfläche der Radnabe (40) und in einer Weise verbunden ist, die eine Drehbewegung in ihrer eigenen Achse ermöglicht, ein unteres Gehäuse (42) und ein oberes Gehäuse (43), die auf der Welle (41) vorgesehen sind, ein unteres Ende (27), das an dem unteren Aufhängungsarm (22) vorgesehen und mit dem unteren Gehäuse (42) verbunden ist, und ein oberes Ende (26), das an dem oberen Aufhängungsarm (21) vorgesehen und mit dem oberen Gehäuse (43) verbunden ist, umfasst.

## Revendications

1. Système de suspension (1) associé à un châssis (50) et possédant un bras de suspension (20) et un amortisseur (10) associé audit bras de suspension (20), le système de suspension (1) comprend:
un bras de suspension supérieur (21) et un bras de suspension inférieur (22) prévus sur ledit bras de suspension (20), et le bras de suspension supérieur (21) et le bras de suspension inférieur (22) forment un parallélogramme portant une roue droite (60) et une roue gauche (60) à chaque extrémité du bras de suspension supérieur (21) et du bras de suspension inférieur (22) un élément porteur (30) qui s'étend en direction du châssis (50) entre ledit bras de suspension supérieur (21) et ledit bras de suspension inférieur (22),
au moins un élément de connexion du bras de suspension (23) qui fournit une connexion sur ledit élément porteur (30) à travers le milieu des surfaces du bras de suspension supérieur (21) et du bras de suspension inférieur (22) se faisant face,
un élément de connexion au châssis (32) prévu à l'extrémité de l'élément porteur (30) qui s'étend vers le côté du châssis (50) et qui fournit une connexion au châssis (50) de manière à fournir un mouvement de rotation autour d'un axe C (III) s'étendant perpendiculairement à la direction d'extension de l'élément porteur (30) et perpendiculairement à l'axe des éléments de connexion du bras de suspension (23);
au moins un élément de liaison inférieur (12) prévu à une extrémité dudit amortisseur (10) et qui fournit une liaison à la surface de l'élément porteur (30) qui fait face au bras de suspension supérieur de manière à fournir un mouvement de rotation autour d'un axe B (II),
au moins un élément de connexion supérieur (11) prévu à l'autre extrémité dudit amortisseur (10) et qui fournit une connexion au châssis (50) de manière à fournir un mouvement de rotation autour d'un axe A (I) **caractérisé en ce que** les éléments de connexion du bras de suspension (23) du bras de suspension supérieur (21) et du bras de suspension inférieur (22) sont positionnés à la fois au niveau d'une partie avant supérieure (231), d'une partie arrière supérieure (232), d'une partie avant inférieure (233) et d'une partie arrière inférieure (234) au milieu des surfaces du bras de suspension supérieur (21) et du bras de suspension inférieur (22) afin de fournir une connexion entre le bras de suspension (20) et l'élément porteur (30),
ledit élément de liaison inférieur (12) de l'amortisseur (10) est connecté à l'espace entre la partie supérieure avant (231) et la partie supérieure arrière (232) du bras de suspension supérieur (21).

2. Le système de suspension (1) selon la revendication 1, dans lequel ledit axe A (I), ledit axe B (II) et ledit axe C (III) sont parallèles l'un à l'autre.

3. Le système de suspension (1) selon les revendications 1 ou 3, dans lequel l'élément de connexion du bras de suspension (23) comprend un logement (31) prévu sur l'élément porteur (30), une ouverture (24) prévue sur le bras de suspension (20), une goupille (25) qui fournit une connexion de manière à fournir une rotation de ladite ouverture (24) dans ledit logement (31) autour de l'axe propre de celle-ci.

4. Le système de suspension (1) selon la revendication 1, dans lequel, afin de fournir une connexion du bras de suspension (20) aux deux moyeux de roue (40) qui fournissent une association du bras de suspension (20) aux deux roues du véhicule (60), un arbre (41) connecté de manière parallèle à la surface dudit moyeu de roue (40) et de manière à fournir un mouvement de rotation dans son propre axe, un logement inférieur (42) et un logement supérieur (43) prévus sur ledit arbre (41), une extrémité inférieure (27) prévue au niveau du bras de suspension inférieur (22) relié audit logement inférieur (42) et une extrémité supérieure (26) prévue au niveau du bras de suspension supérieur (21) relié audit logement supérieur (43).
